# EUROPÄISCHE PATENTSCHRIFT

(11) **EP 1 731 775 B1**
(45) Veröffentlichungstag und Bekanntmachung des Hinweises auf die Patenterteilung: **03.12.2014**
(21) Anmeldenummer: 06114814.4
(22) Anmeldetag: 01.06.2006
(51) Int. Cl.: F16C 19/08, F16C 33/76, F16C 33/78

(54) **Lageranordnung**
Bearing assembly
Palier à roulement

(30) Priorität: 07.06.2005 US 146445
(43) Veröffentlichungstag der Anmeldung: 13.12.2006
(73) Patentinhaber: Deere & Company, Moline, IL 61265-8098 (US)
(72) Erfinder: Gutowski, Jordan E., Elk Grove Village, IL 60007 (US); Cox, Philip D., Polk City, IA 50226 (US); Ruckle, Jarrod R., Bondurant, IA 50035 (US); Bierl, James F., West Des Moines, IA 50266 (US)
(74) Vertreter: Holst, Sönke

(56) Entgegenhaltungen:
- DE-A1- 4 312 364
- US-A- 5 419 642

## Beschreibung

Die Erfindung betrifft eine Lageranordnung, umfassend einen sich axial erstreckenden Außenring, einen sich axial erstreckenden Innenring, wenigstens eine Mehrlippendichtung, welche zwischen dem Außenring und dem Innenring angeordnet ist, wobei die Mehrlippendichtung eine Dichtungsabdeckung aufweist, welche sich zwischen dem Außenring und dem Innenring erstreckt und einen sich radial erstreckenden Bereich, welcher axial am Außenring oder am Innenring fixiert ist, sowie einen mittleren Bereich umfasst, an welchem Dichtungslippen befestigt sind, die mit dem Innenring bzw. dem Außenring in Eingriff stehen, wobei die Dichtungslippen relativ zur Lageranordnung axial in Innenrichtung zur Dichtungsabdeckung angeordnet ist, ein Dichtring, welcher relativ zur Lageranordnung axial in Außenrichtung zur Dichtungsabdeckung angeordnet ist, und eine Lippendichtung vorgesehen sind, die Lippendichtung zwischen der Dichtungsabdeckung und dem Dichtring angeordnet ist und eine Dichtungsfunktion zwischen dem Dichtring und der Dichtungsabdeckung übernimmt.

Eine für extreme Betriebsbedingungen vorgesehene Lageranordnung ist oftmals Schmutz und Schlamm ausgesetzt, welche mit der Zeit an Dichtungen anhaften und gegen diese drücken, so dass Verunreinigungen in das Innere der Lageranordnung gelangen können. Wartungsfreie Lager können nicht auf einfache Weise geschmiert werden, so dass das von außen eindringende Material üblicherweise nicht ausgespült werden kann. Bei der Anwendung von Hochdruckreinigern zur Reinigung von Bereichen in der Nähe von Lageranordnungen, werden durch den Reinigungsvorgang oftmals Verunreinigungen in das Lagergehäuse gespült. Wenn ein Lager verunreinigt ist, kann es sich festfressen und blockieren oder sich durch Verschleiß lockern.

Probleme durch Verunreinigungen treten insbesondere bei Lagern an landwirtschaftlichen Bodenbearbeitungsgeräten auf, wie z. B. an Scheibenlagern, welche mit nassen und schlammigen Bodenverhältnissen konfrontiert werden. Schlammanhäufungen und das gegen die Dichtungen drücken gefährden einen Dichtungsschutz durch die Lagerdichtungen. Extreme Temperaturbedingungen und das Gefrieren vom Material um das Lager herum erhöht die Gefährdung durch Verunreinigungen. Mehrere Male pro Jahr können derartige Lager einer Hochdruckreinigung unterzogen werden, was das Verunreinigungsproblem zusätzlich erhöht. Auch Lageranordnungen, wie sie in der US 4,249,782 offenbart sind, mit im Wesentlichen guten Eigenschaften, weisen Schadensfälle auf, die durch die rauen umgebungsbedingten Betriebsbedingungen immer wieder auftreten.

DE 43 12 364 A1 offenbart eine Radialwälzlagerdichtung mit einer Radialdichtung, welche von einer metallischen Kappe gehalten wird. die Radialdichtung weist einen elastischen Dichtungskörper auf, der mit mehreren Dichtlippen versehen ist. Die Radialwälzlagerdichtung umfasst ferner eine die Radialdichtung überdeckende Schleuderscheibe, wobei sich zwischen der Radialdichtung und der Schleuderscheibe eine Axialdichtung erstreckt. Die Axialdichtung umfasst eine an der Schleuderscheibe gleitend anliegende Dichtlippe. Trotz der zwischen der Radialdichtung und der Schleuderscheibe angeordneten Axialdichtung können raue Betriebsbedingungen zu Verunreinigungen im abzudichtenden Bereich führen.

Die der Erfindung zugrunde liegende Aufgabe wird darin gesehen, eine verbesserte Lageranordnung der eingangs genannten Art anzugeben, durch welche einige oder alle der vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird in eine Lageranordnung der eingangs genannten Art derart ausgebildet, dass der Innenring einen abgestuften Bereich aufweist und die Dichtungsabdeckung am Außenring befestigt ist und einen Endbereich aufweist, welcher sich bis dicht benachbart zum abgestuften Bereich erstreckt, wobei der Dichtring am Innenring befestigt ist und am abgestuften Bereich anliegt und wobei der Endbereich sich bis über eine Außenumfangsfläche des Innenrings hinaus radial in Innenrichtung der Lageranordnung erstreckt, so dass zwischen Dichtring und Mehrlippendichtung ein gewundener Pfad ausgebildet ist.

In einem Ausführungsbeispiel der Erfindung umfasst eine Lageranordnung eine Mehrlippendichtung, die um eine Dichtungsabdeckung erweitert ist, die von einem Außenring der Lageranordnung getragen wird und die sich bis hin zu einem abgestuften Absatz am Innenring erstreckt. Ein Stahldichtring, welcher von dem Innenring getragen wird ist neben der Dichtungsabdeckung nach außen hin beabstandet angeordnet und umfasst einen radial außen angeordneten Rand, welcher nahe neben der Verbindung von Dichtungsabdeckung und Außenring angeordnet ist. Der Stahldichtring umfasst einen Außenbereich, der in radialer Richtung nach innen angewinkelt angeordnet ist und eine Dichtungslippe trägt, welche mit einem mittig zwischen Außen- und Innenring angeordneten angewinkelten Bereich der Dichtungsabdeckung in Eingriff steht. Ein am Innenring ausgebildeter erster Absatz verhindert, dass der Stahldichtring in die Dichtung gedrückt werden kann. In einem weiteren Ausführungsbeispiel nimmt ein zweiter am Innenring ausgebildeter Absatz denn innersten Bereich der Dichtungsabdeckung auf und bildet einen Teil des Labyrinths zwischen dem Stahldichtring und der Dichtungsabdeckung, so dass selbst bei rauesten Bedingungen die Lageranordnung effektiv gegen Verunreinigungen geschützt wird.

Ein Vorteil der Erfindung besteht darin, dass bei rauen umgebungsbedingten Betriebsbedingungen oder bei Reinigungsvorgängen mit Hochdruckreinigern verhindert wird, dass Verunreinigungen ins Innere der Lageranordnung gelangen. Die Lageranordnung weist dahingehend Verbesserungen auf, dass sie über ein zuverlässiges Dichtungssystem verfügt, welches Verschmutzungen auch bei extremen umgebungsbedingten Betriebsbedingungen standhält. Eine derartige Lageranordnung eignet sich insbesondere für den Einsatz bei Betriebsbedingungen, bei denen Gefrierungen oder Anhäufungen von Schmutzmaterial um die Lageranordnung herum auftreten oder wenn es üblich ist, das Material Hochdruck auszusetzen. Eine derartige Lageranordnung weist ferner dahingehend Vorteile auf, dass sie eine wesentlich höhere Lebensdauer besitzt, im Vergleich zu bisher erhältlichen Lagern, die in Scheibenanordnungen oder anderen landwirtschaftlichen Geräten eingesetzt werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Draufsicht, teilweise in Schnittdarstellung, einer Lageranordnung mit einer Dichtungsanordnung,
- Fig. 2: eine vergrößerte Schnittansicht der Dichtungsanordnung der Lageranordnung aus Figur 1 und
- Fig. 3: eine Ansicht gemäß Figur 2 mit einer erfindungsgemäßen Ausführungsform der Dichtungsanordnung.

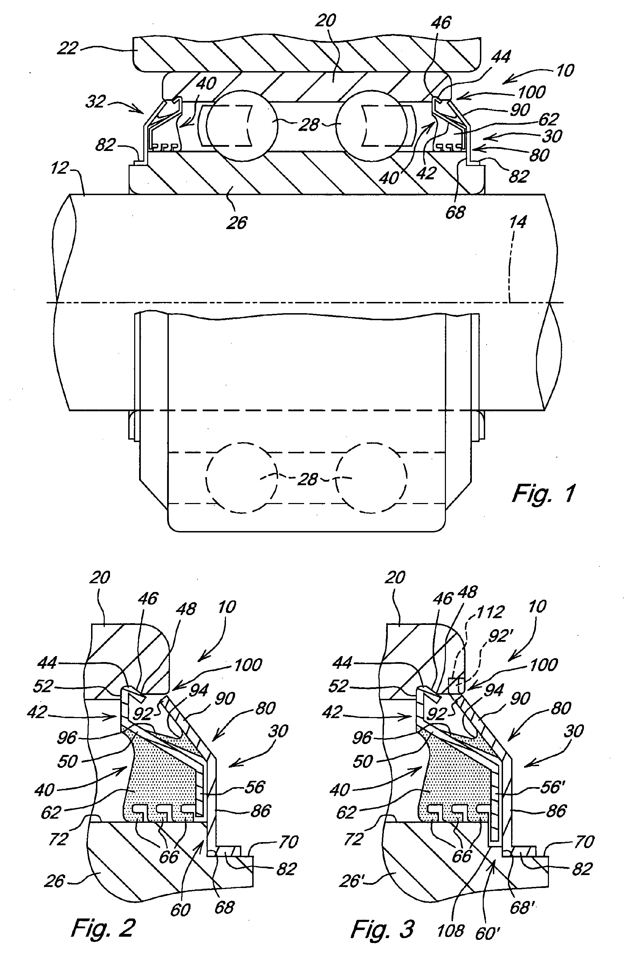

Figur 1 zeigt eine Lageranordnung 10, mit der eine Welle 12 zur Rotation um eine Achse 14 gelagert wird. Die Welle 12 stellt eine Tragachse dar, für eine Gruppe von Scheibensechen (nicht gezeigt), die rotatorisch in den Boden eingreifen.

Die Lageranordnung 10 umfasst einen Außenring 20, der drehfest mit einem Scheibenträger 22 oder mit einer anderen geeigneten Aufnahme verbunden ist. Ein Innenring 26 ist rotierbar über gehärtete Stahlkugeln oder Rollen 28 montiert. Die Welle 12 ist mit dem Innenring 26 zur Rotation um die Achse 14 verbunden. Auch wenn die Lageranordnung 10 hier als Kugellager dargestellt ist, kann eine im Folgenden beschriebene Dichtungsanordnung 30, 32 auch in Verbindung mit anderen Arten von Lagern, insbesondere Rollenlagern, eingesetzt werden.

Die Dichtungsanordnungen 30, 32 sind an den axial außen liegenden Endbereichen der Lageranordnung 10 angeordnet, um das Eindringen von Verunreinigungen in die Lageranordnung 10 zu vermeiden und um externen Einflüssen, wie z. B. Gefrierungen des Materials oder Schlammanhäufungen, die die Dichtungseigenschaften der Dichtungsanordnung 30, 32 beeinträchtigen können, Stand zu halten. Die Dichtungsanordnung 32 ist im Wesentlichen identisch zur Dichtungsanordnung 30 ausgebildet, so dass nur die Dichtungsanordnung 30 detaillierter beschrieben werden soll.

Wie in Figur 1 und 2 dargestellt ist, umfasst die Dichtungsanordnung 30 eine Mehrlippendichtung 40. Die Mehrlippendichtung 40 umfasst eine Dichtungsabdeckung 42 aus Stahl mit einem äußeren Rand 44, welcher in eine innen liegende Umfangsnut 46 eines abgestuften Bereichs 48 des Außenrings 20 eingefasst ist. Die Dichtungsabdeckung 42 erstreckt sich ausgehend von dem eingefassten Rand 44 radial nach innen in einem axial nach außen abgewinkelten oder diagonal verlaufenden Bereich 50. Die Dichtungsabdeckung 42 ist an einer nach außen gewandten Fläche 52 des abgestuften Bereichs 48 abgestützt, um zu verhindern, dass die Dichtungsabdeckung 42 sich ausgehend von der dargestellten Position nach innen bewegen kann. Ein radial innen gelegener Endbereich 56 der Dichtungsabdeckung 42 erstreckt sich ausgehend vom abgewinkelten Bereich 50 in Richtung eines abgestuften Bereichs 60 des Innenrings 26. Ein Dreilippen-Dichtungselement 62 ist an der nach innen gerichteten Fläche des abgewinkelten Bereichs 50 befestigt. Sich radial nach innen erstreckende Dichtungslippen 66 sind am Fuße des Dichtungselements 62 angeordnet und sind in Richtung des Endbereichs 56 der Dichtungsabdeckung 42 nach außen gebogen.

Wie in den Figuren 1 und 2 dargestellt ist, umfassen die abgestuften Bereiche 60 einen einzigen Absatz mit einer nach außen gerichteten Fläche 68, durch welchen am äußersten Ende des Innenrings 26 eine Außenumfangsfläche 70 mit reduziertem Durchmesser definiert wird. Die Außenfläche des Endbereichs 56 der Dichtungsabdeckung 42 ist im dichten Abstand zur Fläche 68 fluchtend angeordnet und die Dichtungsabdeckung 42 endet nahe der Außenumfangsfläche 72 des Innenrings 26 in axialer Richtung innenwärts zum äußersten Ende des Innenrings 26.

Außen, nahe der Dichtungsabdeckung 42, ist ein metallender Dichtring 80 zur Rotation mit dem Innenring 26 befestigt. Der Dichtring 80 formt einen Schutz außerhalb der Mehrlippendichtung 40 zwischen dem Außenring 20 und dem Innenring 26 gegen Druck und Verschmutzungen. Nach innen wirkende Einflüsse, wie z. B. gefrierendes Material oder Schlammanhäufungen an der Welle 12 und Hochdruckeinflüsse von Flüssigkeiten oder Schmutz, der nach innen gegen die Mehrlippendichtung 40 drückt, werden durch den Dichtring 80 abgewehrt.

Der Dichtring 80 umfasst einen L-förmigen Fuß 82 der an der Fläche 68 des am Innenring 26 ausgebildeten Absatzes anlehnt. Der Absatz verhindert, dass der Dichtring 80 nach innen auf die Dichtungsabdeckung 42 gedrückt wird. Ein radialer Wandbereich 86 des Dichtrings 80 erstreckt sich von dem Fuß 82 ausgehend nach außen, im Wesentlichen parallel zu dem Endbereich 56. Ein nach innen abgewinkelter Dichtringbereich 90 erstreckt sich radial nach außen und endet nahe neben der Innenumfangsfläche des abgestuften Bereichs 48 des Außenrings 20.

Eine Lippendichtung 94 ist zwischen dem Dichtring 80 und der Dichtungsabdeckung 42 angeordnet und an die innere Fläche des abgewinkelten Bereichs 90 des Dichtrings 80 befestigt und umfasst eine Lippe 96, die gegen einen mittleren Bereich des abgewinkelten Bereichs 50 der Dichtungsabdeckung 42 drückt. Die Lippendichtung 94 verhindert, dass wenn Schmutz in einem Bereich 100 zwischen dem Rand des Bereichs 90 und dem axial äußersten Bereich des Außenrings 20 eingedrungen ist, der Schmutz nach innen zwischen den radialen Wandbereich 86 des Dichtrings 80 und den Endbereich 56 der Dichtungsabdeckung 42 wandert. Der Bereich 100 ist im Wesentlichen durchgehend und ermöglicht, das Material radial aus dem Dichtring 80 austreten kann. Der abgewinkelte Bereich 90 des Dichtrings 80 umfasst einen Rand 92 mit einer axial äußersten schrägen Fläche, die im Bereich 100 im Wesentlichen zu einer axial äußersten Fläche des Außenrings 20 ausgerichtet ist. Die Winkel der abgewinkelten Bereiche der Dichtungsabdeckung 42 bzw. des Dichtrings 80 und die der Lippe 96 sind derart ausgebildet, dass Verschmutzungen widerstanden und abgewehrt werden können und die Verschmutzungen von der eigentlichen Dichtung 40 weggeleitet werden.

Figur 3 zeigt eine Dichtungsanordnung 30, die ähnlich zu der in den Figuren 1 und 2 gezeigten Dichtungsanordnung 30 ausgebildet ist und einen erweiterten Endbereich 56' der Dichtungsabdeckung 42 aufweist, der sich gegen einen mit einer zweiten Abstufung 108 versehenen abgestuften Bereich 60' abstützt, wobei die Abstufung 108 an einem Innenring 26' ausgebildet ist und einen zusätzlichen Schutz für die eigentliche Dichtung 40 bietet. Der Dichtring 86 ist in eine erste Abstufung 68' eingepasst. Dadurch, dass die Dichtungsabdeckung 42 bis unterhalb des Außendurchmessers des Innenrings 26' erweitert wird, wird an der Abstufung 108 eine mit einem engen Spiel ausgebildete Labyrinthpassung geschaffen, die zusammen mit der ersten Abstufung 68', einen Teil eines Labyrinths zwischen dem Dichtungselement 62 und dem radialen Wandbereich 86 des Dichtrings 80 bildet.

Um zusätzlichen Halt für den Dichtring 80 zu schaffen, kann der Rand 92 bis hinter die Innenumfangsfläche des Außenrings 20 radial erweitert werden. Beispielsweise kann, wie durch die gestrichelten Linien in Figur 3 markiert ist, eine zusätzliche Abstufung 112 in das Ende des Außenrings 20 eingearbeitet werden, um ein Labyrinth am Rand 92' des Dichtrings 80 zu schaffen, durch welches zusätzlich das Eindringen von Verunreinigungen erschwert wird. Wenn hohe axiale Kräfte gegen den Dichtring 80 drücken, dann kann die nach außen gerichtete Fläche der Abstufung 112 (oder die Außenfläche des Außenrings 20 wenn eine zusätzliche Abstufung 112 nicht vorgesehen ist) den Dichtring 80 davor schützen, gegen die Dichtungsabdeckung 42 gedrückt zu werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise die Anordnung von Dichtungsabdeckung 42 und Dichtring 80 umgekehrt erfolgen, so dass die Dichtungsabdeckung 42 am Innenring 26 bzw. 26' und der Dichtring 80 am Außenring 20 befestigt ist.

## Patentansprüche

1. Lageranordnung, umfassend:
- einen sich axial erstreckenden Außenring (20),
- einen sich axial erstreckenden Innenring (26),
- wenigstens eine Mehrlippendichtung (40), welche zwischen dem Außenring (20) und dem Innenring (26) angeordnet ist, wobei die Mehrlippendichtung (40) eine Dichtungsabdeckung (42) aufweist, welche sich zwischen dem Außenring (20) und dem Innenring (26) erstreckt und einen sich radial erstreckenden Bereich, welcher axial am Außenring (20) oder am Innenring (26) fixiert ist, sowie einen mittleren Bereich (50) umfasst, an welchem Dichtungslippen (66) befestigt sind, die mit dem Innenring (26) bzw. dem Außenring (20) in Eingriff stehen, wobei:
- die Dichtungslippen (66) relativ zur Lageranordnung (10) axial in Innenrichtung zur Dichtungsabdeckung (42) angeordnet ist,
- ein Dichtring (80), welcher relativ zur Lageranordnung (10) axial in Außenrichtung zur Dichtungsabdeckung (42) angeordnet ist, und eine Lippendichtung (94) vorgesehen sind,
- die Lippendichtung (94) zwischen der Dichtungsabdeckung (42) und dem Dichtring (80) angeordnet ist und eine Dichtungsfunktion zwischen dem Dichtring (80) und der Dichtungsabdeckung (42) übernimmt,
**dadurch gekennzeichnet, dass** der Innenring (26) einen abgestuften Bereich (60) aufweist und die Dichtungsabdeckung (42) am Außenring (20) befestigt ist und einen Endbereich (56) aufweist, welcher sich bis dicht benachbart zum abgestuften Bereich (60) erstreckt, wobei der Dichtring (80) am Innenring (26) befestigt ist und am abgestuften Bereich (60) anliegt und wobei der Endbereich (56) sich bis über eine Außenumfangsfläche (72) des Innenrings (26) hinaus radial in Innenrichtung der Lageranordnung (10) erstreckt, so dass zwischen Dichtring (80) und Mehrlippendichtung (40) ein gewundener Pfad ausgebildet ist.

2. Lageranordnung nach Anspruch 1, **dadurch gekennzeichnet, dass** die Lippendichtung (94) relativ zur Lageranordnung (10) radial in Außenrichtung zu den Dichtungslippen (66) angeordnet und axial zu den Dichtungslippen (66) ausgerichtet ist.

3. Lageranordnung nach Anspruch 1 oder 2, **dadurch gekennzeichnet, dass** der abgestufte Bereich (60) eine erste und eine zweite Abstufung (68, 68', 108) aufweist, wobei die erste Abstufung (68, 68') gegenüber der zweiten Abstufung (108) relativ zur Lageranordnung (10) axial außen gelegen ist und wobei der Dichtring (80) an der ersten Abstufung (68, 68') befestigt ist und wobei der Endbereich (56) der Dichtungsabdeckung (42) und die zweite Abstufung (108) sich radial überlappen und eine mit einem engen Spiel ausgebildete Labyrinthpassung bilden.

4. Lageranordnung nach einem der vorhergehenden Ansprüche, **dadurch gekennzeichnet, dass** der mittlere Bereich (50) der Dichtungsabdeckung (42) sich diagonal zwischen dem Außenring (20) und dem Innenring (26) erstreckt.

5. Lageranordnung nach einem der vorhergehenden Ansprüche, **dadurch gekennzeichnet, dass** der Dichtring (80) einen mittleren Bereich (90) aufweist, welcher sich diagonal zwischen dem Außenring (20) und dem Innenring (26) erstreckt und an dem die Lippendichtung (94) befestigt ist, wobei die Lippendichtung (94) mit dem mittleren Bereich (50) der Dichtungsabdeckung (42) in Eingriff steht.

6. Lageranordnung nach einem der Ansprüche 1 bis 5, **dadurch gekennzeichnet, dass** der Außenring (20) einen abgestuften Bereich (112) aufweist und der Dichtring (80) einen relativ zur Lageranordnung (10) radial äußeren Rand aufweist, welcher in den abgestuften Bereich (112) des Außenrings (20) hineinragt und gegen diesen abstützbar ist, sobald eine äußere Axialkraft den Dichtring (80) ins Innere der Lageranordnung (10) drückt.

7. Lageranordnung nach einem der Ansprüche 1 bis 6, **dadurch gekennzeichnet, dass** der Dichtring (80) einen relativ zur Lageranordnung (10) radial äußeren Rand aufweist, welcher an eine axial äußerste Fläche des Außenrings (20) ragt und gegen diese abstützbar ist, sobald eine äußere Axialkraft den Dichtring (80) ins Innere der Lageranordnung (10) drückt.

8. Lageranordnung nach einem der Ansprüche 5 bis 7, **dadurch gekennzeichnet, dass** die mittleren Bereiche (50, 90) sich relativ zur Lageranordnung (10) radial nach außen von axial außen nach axial innen erstrecken und in Relativbewegung zueinander rotieren.

9. Lageranordnung nach einem der vorhergehenden Ansprüche, **dadurch gekennzeichnet, dass** die Dichtungslippen (66) im Wesentlichen die gleiche Länge aufweisen und deren Enden relativ zur Lageranordnung (10) axial nach außen gegen den Innenring (26) gebogen sind.

10. Lageranordnung nach einem der vorhergehenden Ansprüche, **dadurch gekennzeichnet, dass** die Lippendichtung (94) sich relativ zur Lageranordnung (10) radial nach außen und axial nach innen vom Dichtring (80) bis hin zu einer Kontaktfläche auf dem mittleren Bereich (50) der Dichtungsabdeckung (42) erstreckt.

11. Lageranordnung nach einem der vorhergehenden Ansprüche, **dadurch gekennzeichnet, dass** die Dichtungsabdeckung (42) und/oder der Dichtring (80) aus Metall, vorzugsweise aus Stahl ausgebildet sind.

## Claims

1. Bearing arrangement, comprising:
- an axially extending outer ring (20),
- an axially extending inner ring (26),
- at least one multi-lip seal (40) which is arranged between the outer ring (20) and the inner ring (26), wherein the multi-lip seal (40) has a seal cover (42) which extends between the outer ring (20) and the inner ring (26) and comprises a radially extending region, which is fixed axially to the outer ring (20) or to the inner ring (26), and a middle region (50), to which there are fastened seal lips (66) which engage with the inner ring (26) or with the outer ring (20) respectively, wherein:
- the seal lips (66) are arranged, relative to the bearing arrangement (10), axially to the inside of the seal cover (42),
- a sealing ring (80) and a lip seal (94) are provided, the sealing ring being arranged, relative to the bearing arrangement (10), axially to the outside of the seal cover (42),
- the lip seal (94) is arranged between the seal cover (42) and the sealing ring (80) and performs a seal function between the sealing ring (80) and the seal cover (42),
**characterized in that** the inner ring (26) has a stepped region (60) and the seal cover (42) is fastened to the outer ring (20) and has an end region (56) which extends to a point closely adjacent to the stepped region (60), wherein the sealing ring (80) is fastened to the inner ring (26) and bears against the stepped region (60), and wherein the end region (56) extends radially beyond an outer circumferential surface (72) of the inner ring (26) toward the inside of the bearing arrangement (10), such that a meandering path is formed between the sealing ring (80) and the multi-lip seal (40).

2. Bearing arrangement according to Claim 1, **characterized in that** the lip seal (94) is, relative to the bearing arrangement (10), arranged radially to the outside of the seal lips (66) and aligned axially with the seal lips (66).

3. Bearing arrangement according to Claim 1 or 2, **characterized in that** the stepped region (60) has a first and a second step (68, 68', 108), wherein the first step (68, 68') is, relative to the bearing arrangement (10), situated axially to the outside of the second step (108), and wherein the sealing ring (80) is fastened to the first step (68, 68'), and wherein the end region (56) of the seal cover (42) and the second step (108) radially overlap and form a labyrinth fit with a small amount of play.

4. Bearing arrangement according to one of the preceding claims, **characterized in that** the middle region (50) of the seal cover (42) extends diagonally between the outer ring (20) and the inner ring (26).

5. Bearing arrangement according to one of the preceding claims, **characterized in that** the sealing ring (80) has a middle region (90) which extends diagonally between the outer ring (20) and the inner ring (26) and to which the lip seal (94) is fastened, wherein the lip seal (94) engages with the middle region (50) of the seal cover (42).

6. Bearing arrangement according to one of Claims 1 to 5, **characterized in that** the outer ring (20) has a stepped region (112) and the sealing ring (80) has, relative to the bearing arrangement (10), a radially outer edge which projects into the stepped region (112) of the outer ring (20) and which can be supported against said stepped region when an external axial force pushes the sealing ring (80) into the interior of the bearing arrangement (10).

7. Bearing arrangement according to one of Claims 1 to 6, **characterized in that** the sealing ring (80) has, relative to the bearing arrangement (10), a radially outer edge which projects against an axially outermost surface of the outer ring (20) and which can be supported against said surface when an external axial force pushes the sealing ring (80) into the interior of the bearing arrangement (10).

8. Bearing arrangement according to one of Claims 5 to 7, **characterized in that** the middle regions (50, 90) extend, relative to the bearing arrangement (10), radially outward from axially outside to axially inside and rotate relative to one another in a relative movement.

9. Bearing arrangement according to one of the preceding claims, **characterized in that** the seal lips (66) have substantially the same length, and the ends thereof are, relative to the bearing arrangement (10), bent axially outward toward the inner ring (26).

10. Bearing arrangement according to one of the preceding claims, **characterized in that** the lip seal (94) extends, relative to the bearing arrangement (10), radially outward and axially inward from the sealing ring (80) toward a contact surface on the middle region (50) of the seal cover (42).

11. Bearing arrangement according to one of the preceding claims, **characterized in that** the seal cover (42) and/or the sealing ring (80) are/is formed from metal, preferably from steel.

## Revendications

1. Agencement de palier, comprenant :
- une bague extérieure s'étendant axialement (20),
- une bague intérieure s'étendant axialement (26),
- au moins un joint à lèvres multiples (40) qui est disposé entre la bague extérieure (20) et la bague intérieure (26), le joint à lèvres multiples (40) présentant un recouvrement de joint (42) qui s'étend entre la bague extérieure (20) et la bague intérieure (26) et une région s'étendant radialement qui est fixée axialement à la bague extérieure (20) ou à la bague intérieure (26), ainsi qu'une région centrale (50) sur laquelle sont fixées des lèvres d'étanchéité (66) qui sont en prise avec la bague intérieure (26) ou la bague extérieure (20),
- les lèvres d'étanchéité (66) étant disposées par rapport à l'agencement de palier (10) axialement dans la direction intérieure vers le recouvrement de joint (42),
- une bague d'étanchéité (80) qui est disposée par rapport à l'agencement de palier (10) axialement dans la direction extérieure vers le recouvrement de joint (42), et un joint à lèvre (94) étant prévus,
- le joint à lèvre (94) étant disposé entre le recouvrement de joint (42) et la bague d'étanchéité (80) et réalisant une fonction d'étanchéité entre la bague d'étanchéité (80) et le recouvrement de joint (42),
**caractérisé en ce que** la bague intérieure (26) présente une région étagée (60) et le recouvrement de joint (42) est fixé à la bague extérieure (20) et présente une région d'extrémité (56) qui s'étend jusqu'en position étroitement adjacente à la région étagée (60), la bague d'étanchéité (80) étant fixée à la bague intérieure (26) et s'appliquant contre la région étagée (60) et la région d'extrémité (56) s'étendant jusqu'au-delà d'une surface périphérique extérieure (72) de la bague intérieure (26) dans la direction intérieure de l'agencement de palier (10), de telle sorte qu'entre la bague d'étanchéité (80) et le joint à lèvres multiples (40) soit réalisé un chemin enroulé.

2. Agencement de palier selon la revendication 1, **caractérisé en ce que** le joint à lèvre (94) est disposé par rapport à l'agencement de palier (10) radialement dans la direction extérieure vers les lèvres d'étanchéité (66) et est orienté axialement vers les lèvres d'étanchéité (66).

3. Agencement de palier selon la revendication 1 ou 2, **caractérisé en ce que** la région étagée (60) présente un premier et un deuxième gradin (68, 68', 108), le premier gradin (68, 68') étant placé axialement à l'extérieur par rapport au deuxième gradin (108) par rapport à l'agencement de palier (10) et la bague d'étanchéité (80) étant fixée au premier gradin (68, 68') et la région d'extrémité (56) du recouvrement de joint (42) et le deuxième gradin (108) se chevauchant radialement et formant un ajustement à labyrinthe réalisé avec un jeu étroit.

4. Agencement de palier selon l'une quelconque des revendications précédentes, **caractérisé en ce que** la région centrale (50) du recouvrement de joint (42) s'étend en diagonale entre la bague extérieure (20) et la bague intérieure (26).

5. Agencement de palier selon l'une quelconque des revendications précédentes, **caractérisé en ce que** la bague d'étanchéité (80) présente une région centrale (90) qui s'étend en diagonale entre la bague extérieure (20) et la bague intérieure (26) et à laquelle est fixé le joint à lèvre (94), le joint à lèvre (94) étant en prise avec la région centrale (50) du recouvrement de joint (42).

6. Agencement de palier selon l'une quelconque des revendications 1 à 5, **caractérisé en ce que** la bague extérieure (20) présente une région étagée (112) et la bague d'étanchéité (80) présente un bord radialement extérieur par rapport à l'agencement de palier (10), lequel pénètre dans la région étagée (112) de la bague extérieure (20) et peut être supporté contre celle-ci, dès qu'une force axiale extérieure presse la bague d'étanchéité (80) à l'intérieur de l'agencement de palier (10).

7. Agencement de palier selon l'une quelconque des revendications 1 à 6, **caractérisé en ce que** la bague d'étanchéité (80) présente un bord radialement extérieur par rapport à l'agencement de palier (10), lequel fait saillie au niveau d'une surface axialement la plus extérieure de la bague extérieure (20) et peut être supporté contre celle-ci dès qu'une force axiale extérieure presse la bague d'étanchéité (80) à l'intérieur de l'agencement de palier (10).

8. Agencement de palier selon l'une quelconque des revendications 5 à 7, **caractérisé en ce que** les régions centrales (50, 90) s'étendent par rapport à l'agencement de palier (10) radialement vers l'extérieur depuis une position axialement extérieure vers une position axialement intérieure et tournent l'une par rapport à l'autre dans un mouvement relatif.

9. Agencement de palier selon l'une quelconque des revendications précédentes, **caractérisé en ce que** les lèvres d'étanchéité (66) présentent essentiellement la même longueur et leurs extrémités sont cintrées axialement vers l'extérieur vers la bague intérieure (26) par rapport à l'agencement de palier (10).

10. Agencement de palier selon l'une quelconque des revendications précédentes, **caractérisé en ce que** le joint à lèvre (94) s'étend par rapport à l'agencement de palier (10) radialement vers l'extérieur et axialement vers l'intérieur depuis la bague d'étanchéité (80) jusqu'à une surface de contact sur la région centrale (50) du recouvrement de joint (42).

11. Agencement de palier selon l'une quelconque des revendications précédentes, **caractérisé en ce que** le recouvrement de joint (42) et/ou la bague d'étanchéité (80) sont réalisés en métal, de préférence en acier.
